## Europäisches Patentamt

## European Patent Office

## Office européen des brevets

(19)

(11) Veröffentlichungsnummer: **0 246 461 B1**

# (12) EUROPÄISCHE PATENTSCHRIFT

(45) Veröffentlichungstag der Patentschrift:
**11.12.91 Patentblatt 91/50**

(51) Int. Cl.$^5$: **B62D 13/04, B62D 7/18**

(21) Anmeldenummer: **87105919.2**

(22) Anmeldetag: **22.04.87**

(54) **Verbundachsaggregat.**

(30) Priorität: **21.05.86 DE 3616998**

(43) Veröffentlichungstag der Anmeldung:
**25.11.87 Patentblatt 87/48**

(45) Bekanntmachung des Hinweises auf die
Patenterteilung:
**11.12.91 Patentblatt 91/50**

(84) Benannte Vertragsstaaten:
**BE DE ES FR GB IT NL SE**

(56) Entgegenhaltungen:
**DE-A- 1 810 261**
**FR-A- 2 335 359**
**US-A- 1 349 653**

(73) Patentinhaber: **Bergische Achsenfabrik Fr.
Kotz & Söhne
Am Ohlerhammer
W-5276 Wiehl 1 (DE)**

(72) Erfinder: **Holländer, K.E.
im Krahnöchel 9
W-5276 Wiehl (DE)**
Erfinder: **Steiner, H.
Freiherr v. Stein-Strasse 1
W-5276 Wiehl (DE)**

(74) Vertreter: **Patentanwälte Dipl.-Ing. Alex
Stenger Dipl.-Ing. Wolfram Watzke Dipl.-Ing.
Heinz J. Ring
Kaiser-Friedrich-Ring 70
W-4000 Düsseldorf 11 (DE)**

## Beschreibung

Gegestand der Erfindung ist eine Nachlauflenkachse für Fahrzeuganhänger bei der die Räder über Lenkschenkel an einem Achskörper angelenkt sind und über Lenkhebel und eine Spurstange miteinander in Verbindung stehen und bei der eine Stabilisierungseinrichtung vorgesehen ist.

Nachlauflenkachsen der vorstehend bezeichneten Gattung für Fahrzeuganhänger sind in verschiedenen Ausführungsformen bekannt. Bei diesen Nachlauflenkachsen ist zwischen dem Achskörper und der Spurstange eine Stabilisierungseinrichtung vorgesehen, die beispielsweise aus schrägliegenden Stoßdämpfern besteht, welche einerseits an der Spurstange und andererseits am Achskörper angelenkt sind. Da die Stoßdämpfer den im Fahrbetrieb auftretenden Belastungen nur kurze Zeit gewachsen waren und die Stabilisierung bei Geradeausfahrt unvollkommen war wurden Stabilisierungseinrichtungen entwickelt, welche die Spurstange bei Geradeausfahrt in eindeutig bestimmter Lage am Achskörper fixieren und erst dann einen Lenkeinschlag ermöglichen, wenn eine bestimmte Größe der Haftreibungskräfte zwischen den Rädern und der Fahrbahn diesen Einschlag erzwingt. Eine Nachlauflenkachse mit dieser verbesserten Stabilisierung ist beispielsweise aus der DE-B 18 10 261 bekannt. Bei dieser bekannten Nachlauflenkachse ist zwischen dem Achskörper und einer geteilt ausgebildeten Spurstange ein Gelenk in Längsrichtung verschiebbar angeordnet, welches eine Kurvenführung mit einer Kerbe aufweist, in die eine Führungsrolle ständig unter elastischer Vorspannung eingreift. Außerdem ist am Achskörper ein Schlepphebel gelagert, an dem auch die inneren Enden der Spurstangen angelenkt sind auf dem die mit der Kurvenführung zusammenwirkende Führungsrolle gelagert ist. Diese Nachlauflenkachsen mit einer verbesserten Stabilisierungseinrichtung haben sich zwar im Betrieb bewährt, haben aber eine wartungsintensive Konstruktion mit vielen Verschleißteilen und erfordern eine Drucklufteinrichtung für die Betätigung der Stabilisierungseinrichtung.

Aus der US-A-20 71 686 ist eine Stabilisierungseinrichtung für zwangsgelenkte Räder bekannt, die aus zwischen den Längsschenkeln und dem Achskörper angeordneten Drucklagern mit wellenförmigen Gleitflächen besteht, die um einen Winkel von 90° gegeneinander verdreht angeordnet sind, damit der Hub des unteren Drucklagers im oberen Drucklager ausgeglichen werden kann. Das Rückstellmoment dieser bekannten Stabilisierungseinrichtung ist sehr gering, weil die Drehachse der Drucklager senkrecht über dem Aufstandspunkt der Räder liegt.

Davon ausgehend liegt der Erfindung die **Aufgabe** zugrunde, eine einfach konstruierte Nachlauflenkachse mit einer verbesserten Stabilisierungseinrichtung zu schaffen.

Als technische **Lösung** wird dafür eine Stabilisierungseinrichtung vorgeschlagen, welche aus zwischen den Längsschenkeln und dem Achskörper angeordneten Drucklagern mit wellenförmigen Gleitflächen und die Drucklager in ihrer Ausgangslage für Geradeausfahrt stabilisierenden Federn besteht, wobei jedes Drucklager aus einer am Achskörper befestigten oberen Druckscheibe und einer am Lenkschenkel befestigten unteren Druckscheibe besteht, die Gleitflächen der Druckscheiben wenigstens ein Paar ineinandergreifender Wellenberge und Wellentäler aufweisen, die Federn zwischen jedem Lenkschenkel und jedem Lenkbolzen angeordnet sind und der maximale Hub des Achskörpers in jedem Lenkschenkel kleiner als die Höhe der Wellenberge an den Druckscheiben.

Die Drucklager der Stabilisierungseintichtung werden koaxial auf einem Lenkbolzen angeordnet, der in jedem Lenkschenkel im Achskörper eingeschrumpft ist. Wenn bei Kurvenfahrt eine bestimmte Größe der Haftreibungskräfte zwischen den Rädern und der Fahrbahn einen Lenkeinschlag erzwingt, steigt die am Achskörper befestigte Druckscheibe auf der am Lenkschenkel befestigten Druckscheibe hoch und nimmt dabei den Achskörper mit. Der Aufwärtsbewegung des Achskörpers wirkt die Achslast entgegen, so daß eine lastabhängige Rückstellung der Stabilisierungseinrichtung in die Ausgangslage für Geradeausfahrt erfolgt. Dabei kann der maximale Lenkeinschlag durch die Größe der Öffnung im Lenkschenkel begrenzt werden, in welche der Achskörper hineinragt und in welcher unter dem Achskörper die Stabilisierungseinrichtung angeordnet ist.

Mit der Feder zwischen jedem Lenkschenkel und jedem Lenkbolzen werden die Drucklager unter elastischer Vorspannung in ihrer Ausgangslage für Geradeausfahrt festgehalten, so daß insbesondere bei Leerfahrt ein Lenkeinschlag unterbleibt.

Eine Nachlauflenkachse mit einer nach dieser technischen Lehre ausgebildeten Stabilisierungseinrichtung hat den **Vorteil** einer verblüffend einfachen und äußerst wirksamen Konstruktion. Die mit ihren wellenförmigen Gleitflächen ineinandergreifenden Drucklager werden lastabhängig in ihrer Ausgangslage für Geradeausfahrt stabilisiert und erfordern keine zusätzlichen pneumatischen, hydraulischen oder mechanischen Rückstelleinrichtungen. Die an der Stabilisierungseinrichtung beteiligten Konstruktionsteile sind einfach herzustellen und äußerst wartungsfreundlich. Eine Minimierung der Konstruktionsteile wird infolge der lastabhängigen Rückstellung mit einer Optimierung der Wirksamkeit gepaart.

Weitere Einzelheiten und Vorteile ergeben sich aus der nachfolgenden Beschreibung der zugehörigen Zeichnungen, in denen eine bevorzugte Ausführungsform einer Nachlauflenkachse mit einer erfindungsgemäß ausgebildeten Stabilisierungseinrichtung schematisch dargestellt worden ist. In den Zeichnungen zeigen:

Fig. 1 eine Nachlauflenkachse in Ansicht von hinten;

Fig. 2 dieselbe Nachlauflenkachse in Draufsicht;

Fig. 3 das Lager eines Lenkschenkels am Achskörper, wobei sich die Stabilisierungseinrichtung in ihrer Ausgangslage für Geradeausfahrt befindet;

Fig. 4 dasselbe Lager eines Lenkschenkels am Achskörper, wobei sich die Stabilisierungseinrichtung in einem maximalen Lenkeinschlag von ca. 20° befindet;

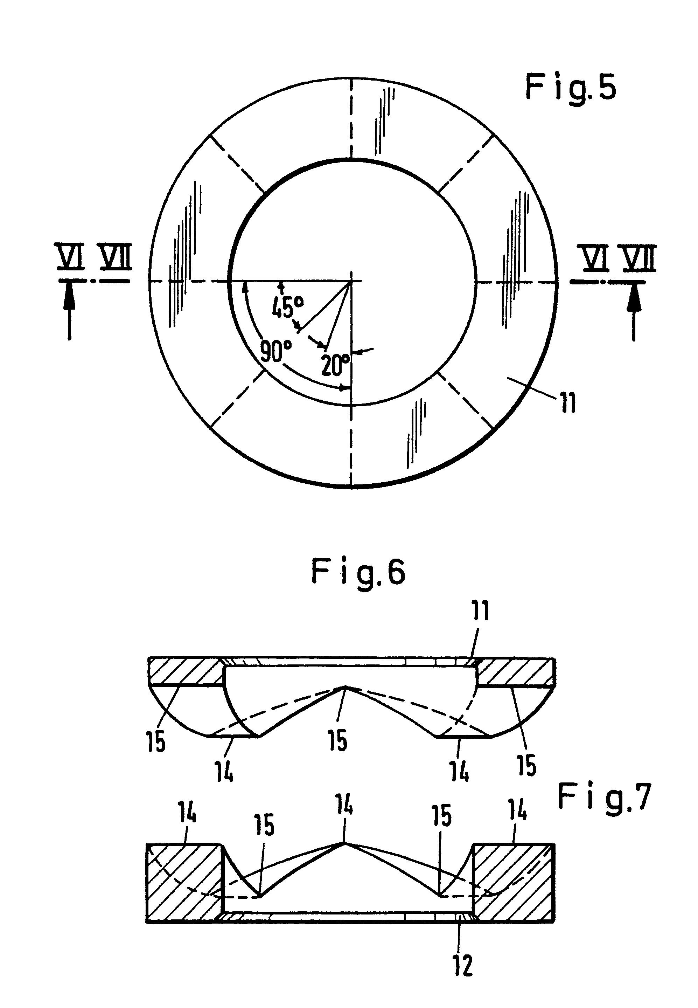

Fig. 5 eine Stabilisierungseinrichtung in Draufsicht;

Fig. 6 eine obere Druckscheibe der Stabilisierungseinrichtung entlang der Linie VI-VI in Fig. 5 geschnitten;

Fig. 7 eine untere Druckscheibe der Stabilisierungseinrichtung entlang der Linie VII-VII in Fig. 5 geschnitten.

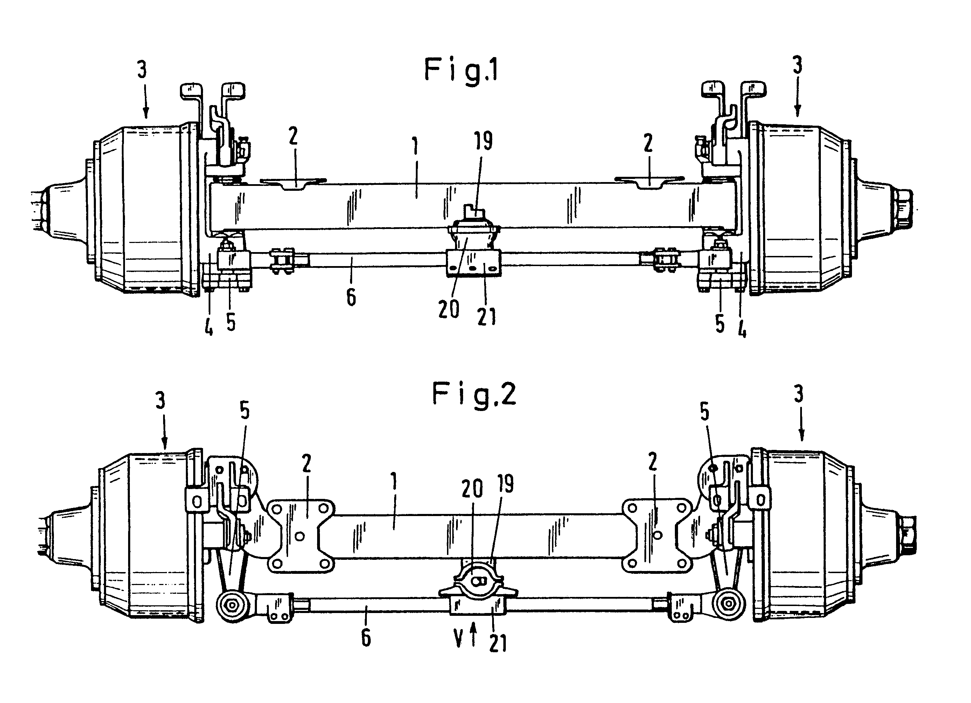

Die in den Fig. 1 und 2 dargestellte Nachlauflenkachse wird vor allem in Dreiachsaggregaten als hintere letzte Achse eingebaut, wenn die Achsabstände größer als 1 m werden, um bei Kurvenfahrt das Radieren der Reifen der hinteren Räder zu vermindern und ein besseres Einspuren des gesamten Dreiachsaggregates herbeizuführen.

Die dargestellte Nachlauflenkachse besteht aus einem Achskörper 1 mit in Fahrtrichtung bei Vorwärtsfahrt V nach vorne abgekröpften Enden, mit Federkonsolen 2, Rädern 3, die mit Lenkschenkeln 4 am Achskörper 1 angelenkt sind und über mit den Lenkschenkeln 4 verbundene Lenkhebel 5 und eine Spurstange 6 miteinander in Verbindung stehen.

Die Drehachse des Lagers eines Lenkschenkels 4 am Achskörper 1 wird durch einen Lenkbolzen 7 definiert, der in dem Achskörper 1 befestigt, vorzugsweise eingeschrumpft ist und mindestens 150 mm in Fahrtrichtung bei Vorwärtsfahrt V vor der Mitte des Achskörpers 1 liegt. Durch diesen Versatz zwischen den Drehachsen der beiden Lenkbolzen 7 und den Aufstandspunkten der Reifen der Räder 3 bzw. der Mitte des Achskörpers 1 kommt der selbsteinspurende Nachlaufeffekt zustande.

Jeder Lenkschenkel 4 umgreift gabelförmig ein Ende des Achskörpers 1 und ist mit Bohrungen 8 versehen, in welche die aus dem Achskörper 1 herausragenden Enden des Lenkbolzens 7 eingreifen können. Die Bohrungen 8 sind mit Lagerbuchsen 9 für den Lenkbolzen 7 ausgekleidet und mit Deckeln 10 verschlossen.

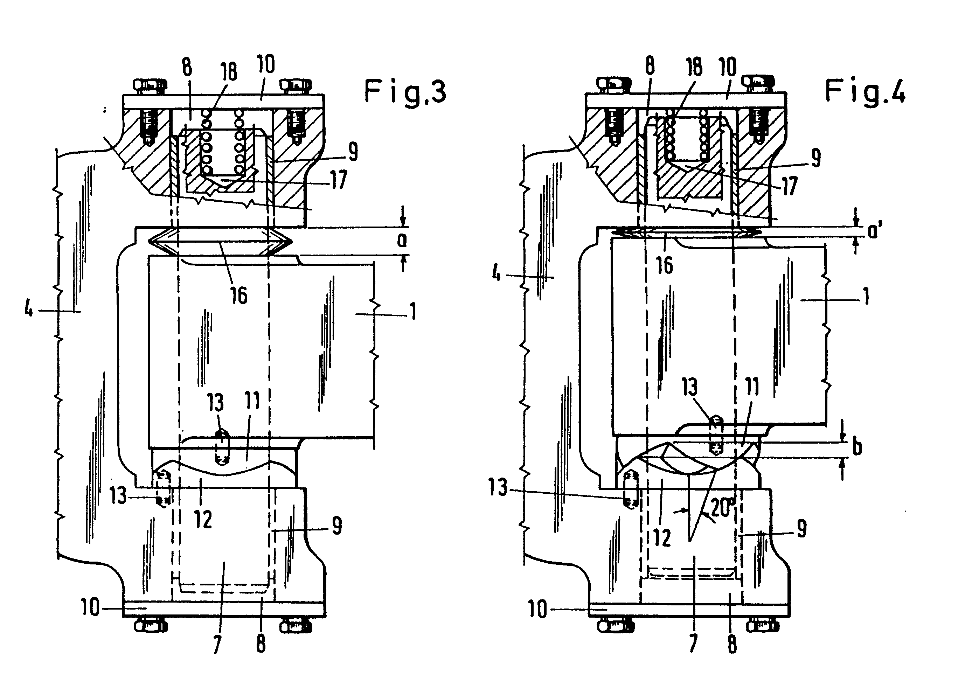

Zwischen dem Achskörper 1 und jedem Lenkschenkel 4 ist eine aus einer oberen Druckscheibe 11 und einer unteren Druckscheibe 12 bestehende Stabilisierungseinrichtung angeordnet. Die obere Druckscheibe 11 ist am Achskörper 1 und die untere Druckscheibe 12 am Lenkschenkel 4 befestigt. Die Befestigung kann durch Paßstifte 13 erfolgen, es ist aber auch möglich, die beiden Druckscheiben 11, 12 anzuschweißen. Die aneinander anliegenden Gleitflächen der beiden Druckscheiben 11, 12 sind wellenförmig ausgebildet und haben in dem dargestellten Ausführungsbeispiel jeweils vier Wellenberge 14 und vier Wellentäler 15, die um einen Winkel von 45° gegeneinander verdreht ineinandergreifen. Diese Ausgangslage bei Geradeausfahrt in Vorwärtsfahrt V ist in der Fig. 3 dargestellt worden. Wenn die Haftreibungskräfte zwischen den Rädern und der Fahrbahn eine bestimmte Größe überschreiten und einen Lenkeinschlag erzwingen steigen die Flanken der Wellenberge 14 an der oberen Druckscheibe 11 an den Flanken der Wellenberge 14 an der unteren Druckscheibe hoch bis das Bewegungsspiel des Achskörpers 1 in dem gabelförmigen Maul des Lenkschenkels 4 erschöpft ist. Diese Endlage bei einem Lenkeinschlag von ca. 20° ist in der Fig. 4 dargestellt worden.

Aus einem Vergleich der beiden in den Fig. 3 und 4 dargestellten Lenkstellungen bei Geradeausfahrt und bei Kurvenfahrt ergibt sich, daß ein in der Ausgangslage gemäß Fig. 3 vorhandener maximaler Hub a auf einen bei Kurvenfahrt gemäß Fig. 4 verbleibenden Resthub a' zusammenschrumpft, wobei die Hubdifferenz b von der Steigung der Wellenberge 14 und dem Verdrehwinkel der beiden Druckscheiben 11, 12 abhängig ist. Der Resthub a' kann mit einer auf dem Lenkbolzen 7 zwischen dem Achskörper 1 und dem Lenkschenkel 4 angeordneten Feder 16 eingestellt werden, die gleichzeitig auch als Dichtung benutzbar ist.

Damit die Stabilisierungseinrichtung bei geringer Achslast, also insbesondere bei Leerfahrt unter Vorspannung in ihrer Ausgangslage festgehalten wird, ist in einer Sacklochbohrung des Lenkbolzens 7 eine Druckfeder 18 angeordnet, die sich am Deckel 10 des Lenkschenkels 4 abstützt.

Für das Rangieren bei Rückwärtsfahrt muß die Stabilisierungseinrichtung arretiert werden. Diese Arretiervorrichtung kann aus einer Fixierung zwischen dem Achskörper 1 und der Spurstange 6 bestehen oder auch durch eine Blockierung des Hubes a zwischen dem Achskörper 1 und dem Lenkschenkel 4 gelöst werden. Bei dem in den Fig. 1 und 2 dargestellten Ausführungsbeispiel ist am Achskörper 1 eine Sperrplatte 19 befestigt, die einen Sperrzylinder 20 trägt, welcher mit einer an der Sperrstange 6 befestigten Sperrplatte 21 zusammenwirkt.

## Bezugszeichenliste

| | |
|---|---|
| 1 | Achskörper |
| 2 | Federkonsole |
| 3 | Rad |
| 4 | Lenkschenkel |
| 5 | Lenkhebel |

| 6 | Spurstange |
| 7 | Lenkbolzen |
| 8 | Bohrung |
| 9 | Lagerbuchse |
| 10 | Deckel |
| 11 | Druckscheibe (obere) |
| 12 | Druckscheibe (untere) |
| 13 | Paßstift |
| 14 | Wellenberg |
| 15 | Wellental |
| 16 | Feder |
| 17 | Sacklochbohrung |
| 18 | Druckfeder |
| 19 | Sperrplatte |
| 20 | Sperrzylinder |
| 21 | Sperrplatte |
| V | Vorwärtsfahrt |
| a | Hub |
| a' | Resthub |
| b | Hubdifferenz |

**Patentansprüche**

1. Nachlauflenkachse für Fahrzeuganhänger bei der die Räder über Lenkschenkel (4) an einem Achskörper (1) angelenkt sind und über Lenkhebel (5) und eine Spurstange (6) miteinander in Verbindung stehen und bei der eine Stabilisierungseinrichtung vorgesehen ist, **dadurch gekennzeichnet,** daß die Stabilisierungseinrichtung aus zwischen den Lenkschenkeln (4) und dem Achskörper (1) angeordneten Drucklagern (11,12) mit wellenförmigen Gleitflächen und die Drucklager (11,12) in ihrer Ausgangslage für Geradeausfahrt stabilisierenden Federn (16) besteht, daß jedes Drucklager aus einer am Achskörper (1) befestigten oberen Druckscheibe (11) und einer am Lenkschenkel (4) befestigten unteren Druckscheibe (12) besteht, daß die Gleitflächen der Druckscheiben (11,12) wenigstens ein Paar ineinandergreifender Wellenberge (14) und Wellentäler (15), ausweisen, daß die Federn (16) zwischen jedem Lenkschenkel (4) und jedem Lenkbolzen (7) angeordnet sind und daß der maximale Hub (a) des Achskörpers (1) in jedem Lenkschenkel (4) kleiner als die Höhe der Wellenberge (14) an den Druckscheiben (11,12) ist.

2. Nachlauflenkachse nach Anspruch 1, dadurch gekennzeichnet, daß die Gleitflächen der Druckscheiben (11,12) vier ineinandergreifende Wellenberge (14) und Wellentäler (15) aufweisen.

3. Nachlauflenkachse nach den Ansprüche 1 und 2, dadurch gekennzeichnet, daß jeder Lenkschenkel (4) auf einem in Achskörper (1) eingeschrumpften (befestigten) Lenkbolzen (7) gelagert ist.

**Claims**

1. A tracking axle for vehicle trailers, the axle-associated wheels being pivotally connected by way of steering knuckles (4) to an axle beam (1) and being interconnected by way of drop arms (5) and a track rod (6), stabilising means being provided, characterised in that the stabilising means comprise: thrust bearing (11, 12) which have wavy rubbing surfaces and which are disposed between the steering knuckles (4) and the axle beam (1); and springs (16) which stabilise the thrust bearings (11, 12) in their initial position for straight-ahead travel, each thrust bearing comprises a top thrust disc (11) secured to the axle beam (1) and a bottom thrust disc (12) secured to the steering knuckle (4); the rubbing surfaces of the thrust discs (11, 12) having at least one pair of wave crests (14) and wave troughs (15) which engage in one another; the springs (16) are disposed between each steering knuckle (4) and each pivot bolt (7), and the maximum movement (a) of the axle beam (1) in each steering knuckle (4) is less than the height of the crests (14) of the thrust discs (11, 12).

2. An axle according to claim 1, characterised in that the rubbing surfaces of the thrust discs (11, 12) have four crests (14) and troughs (15) which engage one another.

3. An axle according to claims 1 and 2, characterised in that each steering knuckle (4) is mounted on a pivot pin (7) shrink-fitted (secured) in the axle beam (1).

**Revendications**

1. Essieu orientable traîné pour remorque de véhicule dans lequel les roues sont articulées par un levier de manoeuvre de roues (4) à un corps d'essieu (1) et qui sont en liaison les unes avec les autres par un levier de commande de roues (5) et une barre d'accouplement (6) et dans lequel il est prévu un dispositif de stabilisation, caractérisé en ce que le dispositif de stabilisation est constitué de paliers de pression (11, 12) placés entre le levier de manoeuvre de roues (4) et le corps d'essieu (1) et comportant des surfaces de glissement ondulées et des ressorts (16) stabilisant les paliers (11, 12) dans leur position de départ pour un parcours en ligne droite, en ce que chaque palier est constitué d'un disque de pression (11) supérieur fixé à un corps essieu (1) et un disque de pression inférieur (12) fixé au levier de commande (4), en ce que les surfaces de glissement des disques de pression (11, 12) présentent au moins une paire de crêtes d'onde (14) et de creux d'onde (15) s'engageant les uns dans les autres, en ce que les ressorts (16) sont disposés entre chaque levier de manoeuvre de roues (4) et chaque axe de direction (7) en ce que la poussée (a) maximale du corps d'essieu (1) dans chaque levier de manoeuvre de roues (4) est plus faible que la hauteur de la crête d'onde (14) sur les disques de pression (11, 12);

2. Essieu orientable traîné pour remorque de véhicule selon la revendication 1, caractérisé en ce que les surfaces de glissement des disques de pression (11, 12) présentent quatre crêtes d'onde (14) et quatre creux d'onde (15) s'engageant les uns dans les autres.

3. Essieu orientable traîné pour remorque de véhicule selon les revendications 1 et 2, caractérisé en ce que chaque levier de manoeuvre de roues (4) est placé sur un axe de direction (7) (fixé) par contraction sur le corps d'essieu (1).

Fig.1

Fig.2

Fig.3

Fig.4

Fig.5

45°

90° 20°

VI VII

VI VII

11

Fig.6

11

15 15 15

14 14

Fig.7

14 15 14 15 14

12